# EUROPÄISCHE PATENTSCHRIFT

(11) **EP 1 621 313 B1**
(45) Veröffentlichungstag und Bekanntmachung des Hinweises auf die Patenterteilung: **24.02.2010**
(21) Anmeldenummer: 05012698.6
(22) Anmeldetag: 14.06.2005
(51) Int. Cl.: B29C 45/14, H01H 9/18

(54) **Verfahren zur Herstellung einer Bedientaste mit freigestelltem Symbol**
Method for producing a control button having an exposed symbol
Procédé pour produire une touche de commande avec un symbole exposé

(30) Priorität: 26.07.2004 DE 102004036171
(43) Veröffentlichungstag der Anmeldung: 01.02.2006
(73) Patentinhaber: Angell-Demmel Europe GmbH, 88131 Lindau (DE)
(72) Erfinder: Tämmerich, Rolf, 88161 Lindenberg (DE); Brünnel, Elmar, 88131 Lindau/B (DE); Schumacher, Rolf, 71067 Sindelfingen (DE)
(74) Vertreter: Riebling, Peter

(56) Entgegenhaltungen:
- EP-A- 1 044 779
- EP-A- 1 344 687
- DE-A1- 19 729 486
- PATENT ABSTRACTS OF JAPAN Bd. 009, Nr. 070 (M-367), 30. März 1985 (1985-03-30) -& JP 59 202834 A (YOSHIDA KOGYO KK), 16. November 1984 (1984-11-16)
- PATENT ABSTRACTS OF JAPAN Bd. 2002, Nr. 06, 4. Juni 2002 (2002-06-04) -& JP 2002 046153 A (NISSHA PRINTING CO LTD), 12. Februar 2002 (2002-02-12)

## Beschreibung

Die Erfindung betrifft ein Verfahren und eine Vorrichtung zur Herstellung einer Bedientaste nach dem Patentanspruch 1.

Im Automobilinnenraum wird heute eine Vielzahl von Geräten mit Bedientasten verbaut, die eine Kunststoffoberfläche aufweisen, welche mit einem sinnfälligen Funktionssymbol gekennzeichnet ist. Bisher werden solche Bedientasten aus reinem Kunststoff hergestellt, der mit einem laserfähigen Lack beschichtet wird. Anschließend werden die Funktionssymbole durch Lasergravur auf die Tastenoberfläche übertragen. Im Rahmen der optischen Aufwertung des Fahrzeuginnenraums wurde der Wunsch geäußert, diese Bedientasten mit einer echtmetallischen Oberfläche auszurüsten, deren Design harmonisch auf die Oberflächen der verwendeten Zierteile abgestimmt werden kann.

Bisher ist es noch nicht gelungen, diese Tastenoberfläche entsprechend den Kundenanforderungen darzustellen. Falls es gelingt, ein geeignetes Herstellverfahren für solche Bedientasten zu entwickeln, ist dieses Verfahren auch auf andere Bauteile mit freigestellten Elementen übertragbar.

Metallische Oberflächen werden heute mit Hilfe fixierender Klemmen im Spritzwerkzeug in ihrer Lage positioniert. In der Regel wird dazu das freigeschnittene Innenteil (Symbol) vom Außenteil getrennt und separat im Spritzwerkzeug fixiert. Dabei ist die passgenaue Einbringung der unter Umständen sehr kleinen Teile in das Werkzeug sehr aufwendig. Aufgrund der hohen Spritzdrücke und -temperaturen verursachen die fixierenden Klemmelemente jedoch Druck- und Kratzspuren auf dekorativen Oberflächen. Damit wird die Oberfläche des freigestellten Symbols in unerwünschter Weise beschädigt.

Dieser Nachteil wird von anspruchsvollen Kunden der Automobilindustrie im Sichtbereich nicht akzeptiert. Aufgrund der nicht akzeptablen Nachteile des aktuellen Stands der Technik werden solche Zierteile in der Regel aus lackiertem Kunststoff mit gelaserter Symbolkontur hergestellt. Bauteile mit Fixiermarke werden nur dann eingesetzt, wenn der Fixierpunkt hinreichend klein und das Teil in ausreichend großem Abstand zum Betrachter platziert ist.

Mit der Druckschrift JP 59202834 A wird ein Dekorationsartikel und dessen Präparation offenbart, wobei in einem Formwerkzeug ein zu formendes Bauteil mittels eines Stanzstempels fixiert wird. Das Verfahren beschreibt einen Umform- und Stanzvorgang mittels Stanzstempel mit anschließender Hinterspritzung mit einem Harz. Eine Hinterspritzung von einer steg- und verbindungsfreien Freistellung mit einem geschlossenen Konturzug auf einem Dekor-Zierteil oder ähnliches ist dieser Druckschrift nicht zu entnehmen.

Mit der Druckschrift EP 1 044 779 A1 wird ein Verfahren zur Herstellung von aus Metall bestehenden Gehäuse- oder Stellteilen offenbart, wobei ein geschmiedeter oder gegossener Rohling mit einer Ausnehmung versehen ist, welche mit einem Stanzstempel oder Stanzvorrichtung eingebracht wird. Anschließend wird die Ausnehmung mittels Keil-Schälverformung der Begrenzungswände eingeschnürt und ein transparenter Kunststoff zur Bildung eines Kragens oder Aufwerfung eingespritzt. Danach folgt eine Abtragung der rückseitigen Wandungsfläche mit der Aufwerfung.

Der Erfindung liegt deshalb die Aufgabe zugrunde, eine Bedientaste mit einem Dekor-Zierteil mit einem freigestellten Symbol der eingangs genannten Art so weiterzubilden, dass das in ihm befindliche Innenteil (Symbol) eine unverletzte Oberfläche aufweist und vollständig durch eine umlaufende, steg- und verbindungsfreie Freistellung von dem übrigen Bereich des Dekor-Zierteils getrennt ist.

Zur Lösung der gestellten Aufgabe dient ein Verfahren nach den Merkmalen des Anspruches 1.

Das Kernproblem der Realisierung eines Verbundbauteils in Hinterspritztechnologie besteht in der positionsgenauen Fixierung der freigeschnittenen Elemente zur Anspritzung mit Kunststoff. Handelt es sich zusätzlich um dekorative Bauteile, die keine Druck- und Kratzspuren auf der Dekorseite zeigen dürfen, können die freigestellten Elemente nicht mit Hilfe eines Dornes oder anderer Klemmelemente in der Spitzgussform fixiert werden. Weiterhin muss eine Verschiebung der freigestellten Elemente durch Seitenkräfte, erzeugt durch die Fließbewegung der angespritzten Kunststoffmasse, zuverlässig verhindert werden. Zusätzlich ist der Spalt, der die Kontur des Elementes umschreibt, definiert mit Kunststoff zu füllen und zu schließen, um so ein hinterleuchtbares Symbol zu schaffen.

Vorteil der Erfindung ist, die Realisierung eines (hinterleuchtfähigen, dekorativen) Bauteils auf einem Kunststoffträger, wobei durch Fixierung und Hinterspritzung frei angeordneter Elemente mit echtmetallischer Oberfläche ein hochgenauer, definierter Abstand zu umgebenden Konturen gewährleistet ist. Durch die werkzeugtechnische Verknüpfung beider Prozesse ist ein gesondertes Fixieren des Innenteils (Symbol) mit eigenen, die Oberfläche berührenden Haltemitteln nicht mehr notwendig.

Am Beispiel einer Bedientaste eines Klimakontrollgeräts für Automobile wird ein Verfahren aufgezeigt, das es erlaubt, echtmetallische Oberflächen mit beliebig freigestellten Symbolen und definierter Spaltgeometrie als Kunststoff-Metall-Werkstoffverbund durch Hinterspritzen zu erzeugen.

Grundsätzlich teilt sich das Fertigungsverfahren in einen konturerzeugenden Schneidvorgang mit oder ohne überlagernder Umformung zur Herstellung einer dreidimensionalen Geometrie, sowie einen anschließenden, verbunderzeugenden Spritzvorgang, der am Fertigteil die konturgenaue Verbindung des freigeschnittenen Innenteils zum Außenteil sicherstellt.

Ein wesentliches Kennzeichen des Verfahrens besteht in der gemeinsamen Nutzung des Werkzeug-Unterteils für die beiden Arbeitsgänge "Freischneiden" und "Anspritzen". Somit wird das zu hinterspritzende Metall im ersten Werkzeug von der dekorierten Sichtseite her gestanzt und ggf. umgeformt. Dabei wird der Stanzabfall in die obere Werkzeughälfte geschoben. Der Stanzstempel wird in ausgefahrener Schnittposition verriegelt und das Werkzeug-Unterteil wird mit dem durch den Schneidstempel fixierten Innenteil unter das Spritzwerkzeugoberteil verfahren.

Nach Füllung der Form mit Spritzgussmasse wird der Stanzstempel entriegelt, definiert zurückgezogen und der freiwerdende Raum ebenfalls mit Spritzgussmasse verfüllt. Über den Füllgrad der Form oder die Nachdrucksteuerung kann der Grad der Schneidspaltfüllung von einer Unterfüllung über einen bündigen Randabschluss bis zu einer deutlich fühlbaren Überfüllung variiert werden.

Somit besteht die Möglichkeit, sofern gewünscht, die Symbolkontur am Fertigteil haptisch zu ertasten. Bei Verwendung eines lichtdurchlässigen Kunststoffs kann die Symbolkontur hinterleuchtet oder durchleuchtet werden.

Während des Spritzvorgangs wird aus dem verfahrensbedingt geöffneten Stanzwerkzeugoberteil der Stanzabfall ausgestoßen. Anschließend fährt das gemeinsame Werkzeugunterteil wieder in Schneidposition und das Fertigteil kann aus dem Spritzgusswerkzeug-Oberteil ausgeworfen werden. Dadurch dass das freigeschnittene Innenteil nach erfolgter Trennung und Erzeugung der darstellenden Kontur nicht mehr aus dem Werkzeug entfernt wird und auch beim Hinterspritzen die Lagefixierung nicht aufgehoben wird, können auf diesem Weg kontur- und lagegenau hinterspritzte Teile in wirtschaftlicher Fließfertigung in Großserie hergestellt werden.

In einer bevorzugten Ausgestaltung der Erfindung ist ein zweiteiliges Spritzgusswerkzeug vorgesehen, welches aus einem Werkzeug-Oberteil und einem hierzu verfahrbaren Werkzeug-Unterteil besteht. Die beiden Teile des Werkzeuges definieren die Formkavität.

Zur industriellen Herstellung der erfindungsgemäßen Dekor-Zierteile gibt es verschiedene Ausführungsformen beim Betrieb derartiger Spritzgusswerkzeuge. In einer ersten Ausgestaltung ist vorgesehen, dass auf einem Schiebeschlitten mehrere im Abstand nebeneinander angeordnete Werkzeug-Oberteile angeordnet sind, die einem feststehenden, gemeinsamen Unterteil zuzuordnen sind. Mit dem Hub-Schiebeschlitten wird somit jeweils ein Werkzeugoberteil über ein einziges darunter befindliches Werkzeug-Unterteil verfahren, um so die Zieh- oder nachfolgend die Spritzoperation auszuführen.

Es werden also jeweils ein und demselben Unterteil wahlweise jeweils ein Spritzkopf oder ein getrennt davon angeordneter Umformkopf zugeordnet.

In einer anderen Ausgestaltung der Erfindung ist es vorgesehen, dass anstatt eines Hub-Schiebeschlittens ein rotatives Werkzeug verwendet wird. Auf einem einzigen Werkzeugunterteil werden rotativ die einzelnen Oberteile des Werkzeuges zugeführt, die wiederum wahlweise aus einem Ziehwerkzeug oder einem Spritzwerkzeug bestehen.

Die genannten Werkzeug-Oberteile, welche einem einzigen Werkzeug-Unterteil zugeordnet werden, sind Teil insgesamt einer Spritzgussmaschine mit dazugehörenden Formenhälften und der entsprechende Schließdruck wird in an sich bekannter Weise zwischen den Formenhälften der Spritzgussmaschine erzeugt.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

### Es zeigen:

- Figur 1:: Draufsicht auf ein Dekor-Zierteil nach einer Ausführung der Erfindung
- Figur 2:: (jeweils linker und rechter Halbschnitt): Schnitt durch das Werkzeug in zwei verschiedenen, hintereinanderliegenden Verfahrensschritten
- Figur 3:: (jeweils linker und rechter Halbschnitt): Schnitt durch das gleiche Werkzeug in jeweils wiederum zwei hintereinanderliegenden Verfahrensschritten
- Figur 4:: (jeweils linker und rechter Halbschnitt), weiterer Verfahrensablauf zwischen dem linken und dem rechten Halbschnitt des Werkzeuges
- Figur 5:: jeweils linker und rechter Halbschnitt mit weiterem Verfahrensablauf des Werkzeuges
- Figur 6:: (linker und rechter Halbschnitt): weitere zwei Verfahrensabläufe beim Betrieb des Werkzeuges
- Figur 7:: (jeweils linker und rechter Halbschnitt): jeweils zwei weitere Abschnitte des Betriebes des erfindungsgemäßen Werkzeuges

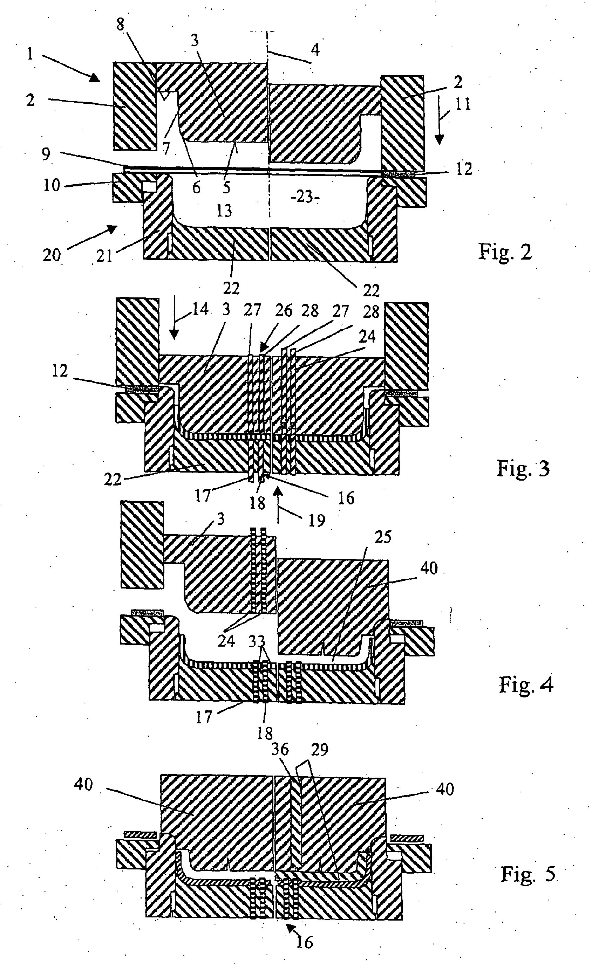

Zu den Figuren 2 bis 7 wird allgemein angemerkt, dass jede Zeichnungsfigur aus zwei Halbschnitten besteht und der zeitliche Ablauf des Betriebes des Werkzeuges jeweils von links nach rechts gehend zu verstehen ist. Der linke Halbschnitt in Figur 2 zeigt also einen ersten Betriebszustand, der nach einer gewissen Zeit in den zweiten Betriebszustand nach dem rechten Halbschnitt der Figur 2 übergeht.

Gleiches gilt für die Figur 3, wo der linke Halbschnitt sich direkt zeitlich an den rechten Halbschnitt der Figur 2 anfügt und der rechte Halbschnitt der Figur 3 einen weiteren Verfahrensablauf zeigt, der wiederum zeitlich gesehen in den linken Halbschnitt der Figur 4 übergeht. Auf diesen folgt zeitlich der rechte Halbschnitt der Figur 4. Auf diese Weise sind die dargestellten Zeichnungen der Figuren 2 bis 5 mäanderförmig zu durchlaufen, um die zeitliche Hintereinanderfolge des Betriebes des erfindungsgemäßen Werkzeuges darzustellen.

Nachdem die Teile in den Figuren 2 bis 7 alle das gleiche Werkzeug betreffen, sind auch nur teilweise die dort bezeichneten Teile mit Bezugszeichen bezeichnet. Für die Darstellung gilt jedenfalls immer, dass das gleiche Teil mit dem gleichen Bezugszeichen versehen ist.

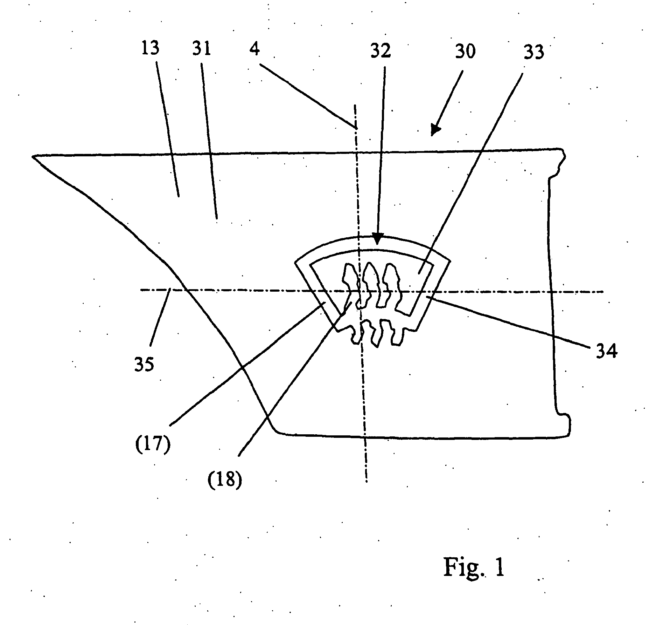

Am Beispiel der Figur 1 wird nun erläutert, wie ein als Bedientaste 30 ausgebildetes Dekor-Zierteil mit den Verfahrensschritten nach den Zeichnungen der Figuren 2 bis 7 hergestellt werden kann.

Die Bedientaste besteht an ihrer Oberfläche aus einem lackierten Aluminiummaterial, welches an seiner Rückseite mit einer Kunststoffmasse 29 hinterspritzt ist.

Wichtig ist, dass die Bedientaste 30 im Bereich ihres Körpers 31 ein Innenteil 33 trägt, das durch eine vollständig umlaufende Freistellung 34 von der Oberfläche 31 abgesetzt ist. Dies bedeutet, dass es die, in der allgemeinen Beschreibung angegebenen, Herstellungsschwierigkeiten gibt, wenn man versucht, das vollständig freigestellte Innenteil 33 im Spritzgussvorgang mit präziser (mit eng toleriertem Spaltabstand) umlaufender Freistellung 34 mit dem übrigen Körper der Bedientaste 30 durch die Kunststoffmasse 29 im Spritzgussverfahren zu verbinden. Die stegfrei umlaufende Freistellung 34 bildet dann das hinterleuchtbare Symbol 32 der Bedientaste 30 aus.

Die Schnittebene 35 in Figur 1 entspricht der Schnittebene durch die Werkzeuge 1, 20 gemäß den Figuren 1 bis 7. Es ist jeweils ein Halbschnitt dargestellt, so dass die Halbschnittlinie 4 in Figur 1 der Halbschnittlinie 4 in den Figuren 2 bis 7 entspricht.

Anhand der Figuren 2 bis 7 wird nun die Funktionsweise des erfindungsgemäßen Werkzeuges näher erläutert.

Das Werkzeug-Oberteil 1 besteht aus einem oberen Ziehstempel 3, der in Pfeilrichtung 14 und in Gegenrichtung hierzu verfahrbar ist. Unabhängig davon ist eine Matrize 2 angeordnet, die ebenfalls in Pfeilrichtung 11 und in Gegenrichtung verfahrbar ausgebildet ist. Im Zwischenraum zwischen dem Werkzeug-Oberteil 1 und -Unterteil 20 wird das Dekor-Zierteil in Form einer Platine 9 eingelegt.

Hierbei ist wichtig, dass die Platine 9 in einer bevorzugten Ausführungsform aus einem empfindlichen Material besteht, z. B. einem lackierten, gebürsteten oder in sonstiger Weise eine berührungsempfindliche Oberfläche aufweisenden Metallteil.

Insbesondere wird es bevorzugt, wenn die Platine 9 aus einem dünnen Aluminiumblech, einer Aluminiumlegierung oder allgemein aus einem Metallmaterial oder aus einem Kunststoff-Metallverbundmaterial besteht.

Es könnte auch ein Holzteil verwendet werden oder ein Kunststoff-Holzteil-Metallverbund oder eine beliebige Kombination aus den oben genannten Werkstoffen.

Wichtig bei der nachfolgend beschriebenen Ausführung ist, dass die Sichtseite 13 der Platine 9 in keiner Weise durch Halte- oder Klemm-Mittel beschädigt werden darf.
Dies gilt auch für das durch die umlaufende Freistellung 34 definierte und dort zu haltende Innenteil 33, das keine Haltespuren, Verletzungen und dergleichen an der Sichtseite 13 aufweisen darf.

Als Beispiel für eine in großen Grenzen wählbare Kontur der Ziehform, wird angegeben, dass die Ziehkontur 5 des Ziehstempels 3 im Querschnitt aus einer horizontalen Linie besteht, die in einen Radius 6 übergeht, der die äußere Kontur der Bedientaste 30 definiert. Dieser Radius 6 geht in eine Gerade 7 über, welche die Ziehflanke des Teils definiert, welche Gerade 7 wiederum in einen senkrecht sich daran anschließenden Ziehanschlag 8 übergeht, der die Ziehtiefe des Teils definiert.

Es wird darauf hingewiesen, dass die Ziehkontur 5 völlig beliebig sein kann. Sie kann bogenförmig oder gewellt sein, sowie Unterbrüche oder dergleichen aufweisen. Die Art und Ausbildung der Ziehkontur 5 hängt von der Art der gewünschten Formgebung der Oberfläche der Bedientaste 30 ab.

Das Werkzeug-Unterteil gemäß dem linken Halbschnitt nach Figur 2 wird unter anderem durch ein Auswerferkissen 22 gebildet, an dessen Seitenrand eine Ziehmatrize 21 bewegbar angeordnet ist.

Die Ziehmatrize 21 ist zu dem Auswerferrahmen 10 verschiebbar ausgebildet.

Gemäß dem rechten Halbschnitt in Figur 2 wird zunächst die Matrize 2 in Pfeilrichtung 11 nach unten verfahren, um so den Rand der Platine 9 zu beschneiden, wodurch das Abfallstück 12 erzeugt wird. Dieses wird zwischen der Matrize 2 und dem Auswerferrahmen 10 eingeklemmt.

Beim weiteren Verfahren des Ziehstempels 3 in die Gegenform 23 wird die Platine 9 in die Formgebung gebracht, wie es im linken Halbschnitt der Figur 3 dargestellt ist.

In diesem Verfahrensschritt wird nun ein Stanzstempel 16 durch das Auswerferkissen 22 hindurchgefahren, der im gezeigten Ausführungsbeispiel aus zwei Stempelteilen 17, 18 besteht. Es versteht sich von selbst, dass die Ausbildung des Stanzstempels mit zwei Stempelteilen nur als beispielhaft zu verstehen ist. So kann der Stanzstempel auch aus einem vor- und einem nachlaufenden Teil bestehen und jede beliebige Stanzkontur erzeugen.

In Figur 1 ist in Klammern angedeutet, welches Stück der Stempelteil 17 in der umlaufenden Freistellung 34 und welches andere Stück der Stempelteil 18 ausschneidet.

Nachdem es sich bezüglich der Halbschnittlinie 4 um symmetrische Teilstücke handelt, sind hier vom Stanzstempel 16 nur die beiden linken Stempelteile 17, 18 dargestellt, während die rechte Seite genau gleich und symmetrisch zur Halbschnittlinie 4 ausgebildet ist. Insgesamt sind in diesem Ausführungsbeispiel also vier unterschiedliche Stempelteile im Einsatz, von denen der Einfachheit halber nur zwei (nämlich die Teile 17 und 18) jeweils auf der einen Seite des Halbschnittes dargestellt sind.

Aus Vereinfachungsgründen ist der Schnitt der Halbschnittlinie 4 jedoch nicht genau im Mittenzentrum gelegt, um eine zeichnerische Vereinfachung der Zeichnungen nach Figur 2 bis 7 zu erreichen.

Gegenüberliegend zu den Stempelteilen 17, 18 im linken Teilschnitt der Figur 3 wird gegenüberliegend im Ziehstempel 3 ein Auswerfer 26 eingefahren, der aus den Teilen 27, 28 besteht, die in ihrer Formgebung genau den auszuschneidenden Teilen gemäß den Stempelteilen 17, 18 entsprechen.

Im rechten Halbschnitt der Figur 3 wird nun der Schnitt ausgeführt, indem der gesamte Stanzstempel 16 in Pfeilrichtung 19 nach oben fährt und eine vollständig umlaufende Freistellung 34 um das Innenteil 33 herum anfertigt, so dass dieses Innenteil 33 durch keinen Steg oder eine sonstige Verbindung mit dem übrigen Körper 31 der Bedientaste 30 verbunden ist.

Wichtig ist nun nach der Darstellung in Figur 3 (rechter Halbschnitt), dass der Stanzstempel 16 im Bereich der umlaufenden Freistellung 34 verbleibt. Somit dient der Stanzstempel 16 mit seinen Stempelteilen 17, 18 als Platzhalter in der umlaufenden Freistellung 34.

Das Schneiden erfolgte nach dem linken Halbschnitt in Figur 3 gegen den Gegendruck der Teile 27, 28 im Auswerfer 26.

Im rechten Halbschnitt der Figur 3 kann nun der Stanzabfall 24 nach oben in den Bereich des Ziehstempels 3 hineinbewegt werden, wodurch der Auswerfer 26 nach oben verfahren wird.

Im linken Halbschnitt der Figur 4 wird nun das Werkzeug-Oberteil 1 im Bezug zum Werkzeug-Unterteil geöffnet, der Stanzabfall 24 wird nach unten hin frei und kann ausgeworfen werden. Wichtig ist, dass nach wie vor der Stanzstempel 16 mit seinen Stempelteilen 17, 18 als Platzhalter in dem ausgeschnittenen Teil der Platine 9 verbleibt.

Nach dem Öffnen des Werkzeug-Oberteils 1 wird das Werkzeug-Unterteil 20 in Spritzposition verbracht und es wird das Spritzwerkzeug-Oberteil 40 nach unten verfahren, so dass sich eine Formkavität 25 gemäß dem rechten Halbschnitt in Figur 4 ergibt.

Wichtig ist, dass der linke Halbschnitt in Figur 4 das Ziehwerkzeug des Werkzeug-Oberteils zeigt, nämlich den Ziehstempel 3, während der rechte Halbschnitt in Figur 4 das Spritzwerkzeug-Oberteil 40 darstellt, welches anstelle des Ziehstempels 3 in Eingriff mit dem Werkzeug-Unterteil 20 gebracht wird. Durch dieses Spritzwerkzeug-Oberteil 40 wird nun die vorher erwähnte Formkavität 25 ausgebildet.

Diese Darstellung im rechten Halbschnitt der Figur 4 ist im linken Halbschnitt der Figur 5 beibehalten.

Im Übergang zwischen dem linken Halbschnitt in Figur 5 und dem rechten Halbschnitt in Figur 5 ist nun erkennbar, dass dem Spritzwerkzeug-Oberteil 40 ein Angusstrichter 36 zugeordnet wird, über den die Kunststoffmasse 29 in die Formkavität 25 eingespritzt wird.

Es versteht sich von selbst, dass der Angusstrichter 36 nicht vertikal von oben in das Oberteil 40 münden muss, sondern es gibt eine Reihe beliebiger anderer Möglichkeiten, einen solchen Angusstrichter in einem Spritzwerkzeug-Oberteil 40 anzuordnen.

Wichtig ist, dass bei vollständig geschlossener und ringsum abgedichteter Formkavität 25 nun die Kunststoffmasse 29 mit hohem Pressdruck in die Formkavität eingespritzt wird und dementsprechend aushärtet. Hierbei ist es erfindungswesentlich, dass der Stanzstempel 16 als Platzhalter in der Platine 9 verbleibt, um so das Mittelteil 33 formstabil und absolut verschiebungsfrei in der Formkavität 25 zu halten. Es kommt zu keinerlei Verschiebung, keinem Verzug und es bedarf auch keinerlei sonstiger Haltemittel, um dieses Innenteil 33 verschiebungsfrei in der Formkavität zu halten, weil die Lagensicherung durch den Stanzstempel 16 gegeben ist.

Es versteht sich von selbst, dass in den Rahmen der vorliegenden Erfindung nicht nur ein einteiliger Stanzstempel 16 fällt, sondern dass der Stanzstempel auch mehrteilig ausgebildet sein kann und mehrerer Stempelteile 17, 18 und dergleichen aufweisen kann. Es können auch mehrere Stanzstempel nebeneinander angeordnet werden und es ist auch nicht lösungsnotwendig, dass der Stanzstempel 16 mit seiner Platzhalterfunktion unbedingt durch das Werkzeug-Unterteil 20 hindurch in vertikale Richtung greift. Er könnte auch in schrägen Richtungen oder in anderer Ebene angreifen.

In der Situation nach dem rechten Halbschnitt der Figur 5 härtet nun die Kunststoffmasse 29 aus und bildet so einen innigen Verbund zum Innenteil 33, welches somit verschiebungsgesichert in der Kunststoffmasse 29 eingespritzt wird.

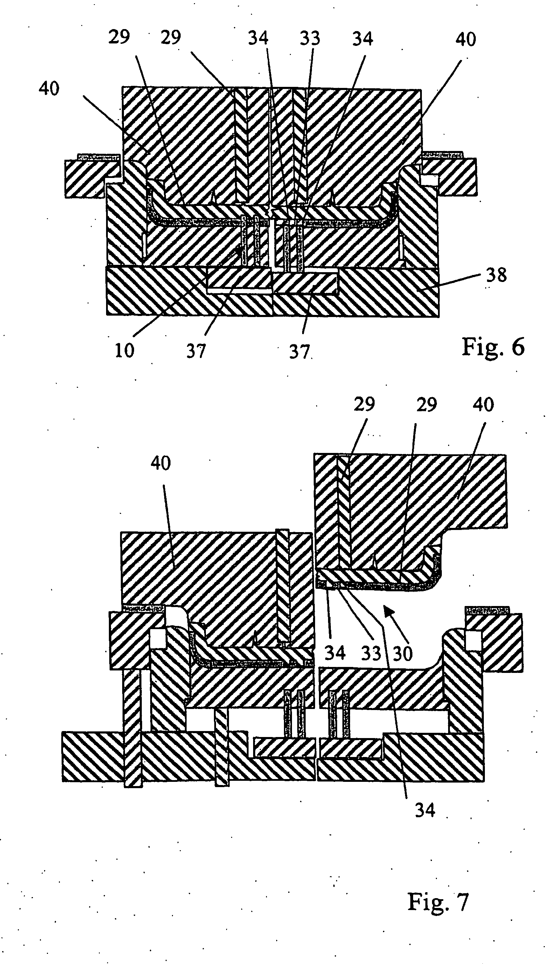

Diese Situation ist im linken Halbschnitt der Figur 6 näher dargestellt. Dort ist gezeigt, dass der Stanzstempel 16 mit einem Kernzug 37 verbunden ist, der beim Übergang in den rechten Halbschnitt nach Figur 6 verschoben wird, so dass der Stanzstempel 16 außer Eingriff mit der Platine 9 kommt und das so hergestellte, mit einer umlaufenden Freistellung 34 definierte Innenteil 33 nun verschiebungsgesichert mit klaren und definierten Schnittkanten in der Kunststoffmasse 29 eingebettet ist.

Der Vorteil des erfindungsgemäßen Verfahrens liegt unter anderem auch darin, dass der Stanzstempel 16 von der Sichtseite 13 her in die Platine 9 hineinschneidet, um so das Innenteil 33 zu bilden, so dass keinerlei Stanzgrate oder sonstige unschöne Verwerfungen an der Sichtseite der Bedientaste 30 sichtbar sind.

Die Erfindung ist hierauf jedoch nicht beschränkt.

Es kann in einer anderen Ausgestaltung durchaus vorgesehen sein, dass der Stanzstempel 16 in die Rückseite der Platine 9 eindringt, um so eine umlaufende Freistellung 34 in Richtung aus der Sichtseite 13 heraus zu bewerkstelligen.

Für funktionale Teile oder dort, wo die Gratgeometrie der Schnittkanten für den Betrachter nicht mehr sichtbar sind, kann es also durchaus zweckmäßig sein, den Stanzstempel von der Rückseite der Platine her in diese einzutreiben.

Auf die erst beschriebene Weise wird gemäß der Figur 1 ein Symbol 32 erzeugt, das aus einer umlaufenden Freistellung 34 besteht, die keinerlei Stege oder sonstige Verbindungsmaßnahmen zu der Oberfläche oder dem Körper 31 der Bedientaste 30 hat.

Wichtig hierbei ist, dass bevorzugt eine durchsichtige (oder mindestens durchleuchtbare) Kunststoffmasse 29 verwendet wird, so dass die gesamte Bedientaste 30 von der Rückseite her durchleuchtbar ist und somit das Symbol 32 gut sichtbar leuchtet. Diese Hinterleuchtbarkeit wird auch als Ausführung im "Tag-Nacht-Design" bezeichnet.

Im linken Halbschnitt der Figur 7 ist nochmals grundsätzlich dieselbe Verfahrensposition wie im rechten Halbschnitt der Figur 6 dargestellt. Es ist nicht dargestellt, dass weitere Auswerfer und dergleichen bewegbare Teile vorhanden sind, welche gegebenenfalls im Werkzeug-Unterteil 20 angeordnet sind.

Im rechten Halbschnitt der Figur 7 ist erkennbar, dass nun das Spritzwerkzeug-Oberteil geöffnet wurde und nun an der Unterseite die fertiggestellte Bedientaste 30 anhaftet, die durch einen nicht näher dargestellten Auswerfer ausgeworfen wird.

Es wird noch erwähnt, dass die vorher erwähnten Kernzüge 37 im Bereich einer Grundplatte 38 als Teil des Werkzeug-Unterteils 20 angeordnet sind.

Der Formfüllungsgrad der Kontur der umlaufenden Freistellung 34 kann durch das gesteuerte Zurückziehen des Stanzstempels 16 im Übergang vom linken Halbschnitt der Figur 6 zum rechten Halbschnitt der Figur 6 gesteuert werden.

Durch den entsprechenden Nachdruck beim Eintreffen der Kunststoffmasse 29 in die Formkavität 25 kann auch ein Überfüllen der umlaufenden Freistellung 34 stattfinden. Dies bedeutet, dass das Symbol haptisch wahrgenommen werden kann.

Wichtig bei der vorliegenden Erfindung ist dem gemäß, dass ein vollständig freistehendes Symbol 32 im Bereich eines Körpers 31 an der Bedientaste 30 erzeugt wird, welches durch eine umlaufende Freistellung 34 im Körper 31 definiert ist. Es bedarf keinerlei optisch unschöner Verbindungsstege, wie sie vorher beim Stand der Technik erforderlich waren. Ebenso bedarf es keiner besonderen Haltemittel wie z. B. Nadeln oder anderer Festhaltemittel, welche die Oberfläche des Symbols 32 bzw. des Innenteils 33 beschädigen könnten.

Ebenso ist wichtig, dass der Körper 31 und das dazugehörende, durch die umlaufende Freistellung 34 davon getrennte Innenteil 33 während des Spritzgussvorgang nicht voneinander getrennt werden, sondern immer in lagengesicherter Position zueinander positioniert sind, so dass die Gefahr der Verschiebung der beiden Teile gegeneinander nicht besteht.

Es ist nicht mehr erforderlich, die beiden Teile, nämlich den Körper 31 und das Innenteil 33 in getrennten Arbeitsvorgängen herzustellen und diese erst in einem Spritzgussvorgang nachträglich miteinander durch die Kunststoffmasse 29 zu verbinden. Ein derartiges Herstellungsverfahren hat sich als nachteilig erwiesen, weil es nicht möglich ist, die umlaufende Freistellung 34 und damit das dadurch gebildete Symbol mit hoher Genauigkeit herzustellen, bei dem alle Abstände gleichmäßig umlaufend sind.

### Zeichnungslegende

- 1: Werkzeug-Oberteil
- 2: Matrize
- 3: Ziehstempel
- 4: Halbschnitt-Linie
- 5: Ziehkontur
- 6: Radius
- 7: Gerade
- 8: Ziehanschlag
- 9: Platine
- 10: Auswerferrahmen
- 11: Pfeilrichtung
- 12: Abfallstück
- 13: Sichtseite
- 14: Pfeilrichtung
- 15:
- 16: Stanzstempel
- 17: Stempelteil
- 18: Stempelteil
- 19: Pfeilrichtung
- 20: Werkzeug-Unterteil
- 21: Ziehmatrize
- 22: Auswerferkissen
- 23: Gegenform
- 24: Stanzabfall
- 25: Formkavität
- 26: Auswerfer
- 27: Teil
- 28: Teil
- 29: Kunststoffmasse
- 30: Bedientaste
- 31: Körper
- 32: Symbol
- 33: Innenteil
- 34: umlaufende Freistellung
- 35: Schnittebene
- 36: Angußtrichter
- 37: Kernzug
- 38: Grundplatte
- 39:
- 40: Spritzwerkzeug-Oberteil
- 41:

## Patentansprüche

1. Verfahren zur Herstellung einer Bedientaste (30) mit einem Dekor-Zierteil mit einem freigestellten Symbol (32), wobei das Fertigungsverfahren aus einem die Freistellung (34) herstellenden Schneidvorgang besteht und das Dekor-Zierteil nachfolgend im Kunststoff-Spritzgieß-Verfahren mit einer Kunststoffmasse (29) hinterspritzt wird, wobei
- das freigestellte Symbol (32) durch eine steg- und verbindungsfreie Freistellung (34) im Körper (31) der Bedientaste (30) definiert ist,
- der den Schneidvorgang durchführende Stanzstempel (16) als Platzhalter in der geschnittenen Kontur der Freistellung (34) während des Spritzvorganges verbleibt,
- und in einem ersten Arbeitsgang das zu hinterspritzende Dekor-Zierteil im ersten Werkzeug (1, 20) von der dekorierten Sichtseite (13) her gestanzt und ggf. umgeformt wird und dabei der Stanzabfall (24) in die obere Werkzeughälfte (1) geschoben wird,
in einem zweiten Arbeitsgang der Stanzstempel (16) in ausgefahrener und den Körper (31) durchsetzender Schnittposition verriegelt wird und das Werkzeug-Unterteil mit dem durch den Schneidstempel fixierten Innenteil unter das Spritzwerkzeugoberteil verfahren wird,
in einem dritten Arbeitsgang eine Kunststoffmasse (29) in die Formkavität (25) eingespritzt und das Innenteil (33) mit der Rückseite des Körpers (31) durch die Kunststoffmasse (29) verbunden wird, und
in einem vierten Arbeitsgang nach Füllung der Formkavität (25) mit Kunststoffmasse (29) der Stanzstempel (16) entriegelt, definiert zurückgezogen und der freiwerdende Raum ebenfalls mit Kunststoffmasse (29) verfüllt wird, so dass die Freistellung (34) umlaufend ist.

2. Verfahren nach Anspruch 1, wobei vor oder mit dem Schneidvorgang eine Umformung einer den Vorläufer zum Dekor-Zierteil bildenden Platine (9) erfolgt.

3. Verfahren nach Anspruch 1 oder 2, wobei das Werkzeug-Unterteil (20) für die beiden Arbeitsgänge "Freischneiden" und "Anspritzen" gemeinsam genutzt wird.

4. Verfahren nach Anspruch 3, wobei über den Füllgrad der Formkavität (25) oder die Nachdrucksteuerung der Kunststoffmasse (29) der Grad der Füllung der umlaufenden Freistellung (34) von einer Unterfüllung über einen bündigen Randabschluss bis zu einer deutlich fühlbaren Überfüllung variiert werden kann.

5. Verfahren nach einem der Ansprüche 1 bis 4, wobei als Kunststoffmasse (29) ein mindestens teilweise lichtdurchlässiger Kunststoff verwendet wird.

## Claims

1. Method for producing an operating button (30) with a decorative ornamental part with an exposed symbol (32), wherein the production method consists of a cutting process producing the exposed part (34) and the decorative ornamental part is subsequently back-injected with a plastics material compound (29) by the plastics material injection moulding method, wherein
- the exposed symbol (32) is defined by a web-free and connection-free exposed part (34) in the body (31) of the operating button (30),
- the punching die (16) carrying out the cutting process remains as a place-holder in the cut contour of the exposed part (34) during the injection process,
- and, in a first work operation, the decorative ornamental part to be back-injected in the first tool (1, 20) is punched from the decorative visible side (13) and optionally shaped and, in the process, the punching waste (24) is pushed into the upper tool half (1),
in a second work operation the punching die (16) is locked in the extended cutting position passing through the body (31) and the lower tool part with the inner part fixed by the cutting die is moved underneath the upper injection moulding tool,
in a third work operation a plastics material compound (29) is injected into the mould cavity (25) and the inner part (33) is connected to the rear of the body (31) by the plastics material compound (29), and
in a fourth work operation, after the filling of the mould cavity (25) with plastics material compound (29), the punching die (16) is unlocked, drawn back in a defined manner and the space becoming free is also filled with plastics material compound (29), so the exposed part (34) is peripheral.

2. Method according to claim 1, wherein a shaping of a blank (9) forming the precursor to the decorative ornamental part takes place before or with the cutting process.

3. Method according to claim 1 or 2, wherein the lower tool part (20) is used for the two work operations "cutting free" and "injecting" together.

4. Method according to claim 3, wherein the degree of filling of the peripheral exposed part (34) can be varied from an underfilling through a flush edge termination to a clearly feelable overfilling by means of the degree of filling of the mould cavity (25) or the dwell pressure control of the plastics material compound (29).

5. Method according to any one of claims 1 to 4, wherein an at least partially transparent plastics material is used as the plastics material compound (29).

## Revendications

1. Procédé pour produire une touche de commande (30) comportant un élément décoratif avec un symbole dégagé (32), le procédé de production se composant d'une opération de découpage qui réalise le dégagement (34), et l'élément décoratif étant ensuite recouvert sur sa face arrière avec une masse de matière plastique (29) à l'aide d'un procédé de moulage par injection de matière plastique, étant précisé
- que le symbole dégagé (32) est défini par un dégagement (34) sans patte ni liaison, dans le corps (31) de la touche de commande (30),
- que le poinçon (16) qui réalise l'opération de découpage reste pendant l'opération d'injection dans le contour découpé du dégagement (34), pour le maintenir en place,
- et que lors d'une première opération, l'élément décoratif à recouvrir par injection par derrière est découpé et éventuellement déformé dans le premier outil (1, 20), par le côté visible décoré (13), et les déchets de découpage (24) sont poussés dans la première moitié d'outil (1),
- que lors d'une deuxième opération, le poinçon (16) est verrouillé dans sa position de découpage dans laquelle il est déployé et il traverse le corps (31), et l'élément d'outil inférieur est amené, avec l'élément inférieur fixé par le poinçon, dans la partie supérieure de l'outil d'injection,
- que lors d'une troisième opération, une masse de matière plastique (29) est injectée dans la cavité de moulage (25) et l'élément intérieur (33) est relié au côté arrière du corps (31) par la masse de matière plastique (29), et
- que lors d'une quatrième opération, après le remplissage de la cavité (25) avec la masse de matière plastique (29), le poinçon de découpage (16) est déverrouillé et rétracté d'une manière définie et l'espace qui se dégage est rempli lui aussi de masse de matière plastique (29), de sorte que le dégagement (34) fait tout le tour.

2. Procédé selon la revendication 1, selon lequel avant ou avec l'opération de découpage a lieu une déformation d'un flan (9) qui forme l'ébauche de l'élément décoratif.

3. Procédé selon la revendication 1 ou 2, selon lequel l'élément d'outil inférieur (20) est utilisé conjointement pour les deux opérations "dégagement par découpage" et "injection".

4. Procédé selon la revendication 3, selon lequel le degré de remplissage de la cavité de moulage (25) ou la commande de maintien en pression de la masse de matière plastique (29) permet de faire varier le degré de remplissage du dégagement prévu sur tout le tour (34), d'un sous-remplissage jusqu'à un sur-remplissage nettement sensible, en passant par un remplissage à ras bord.

5. Procédé selon l'une des revendications 1 à 4, selon lequel on utilise comme masse de matière plastique (29) une matière plastique au moins en partie translucide.
